# EUROPEAN PATENT APPLICATION

(11) **EP 2 284 780 A1**
(43) Date of publication of application: **16.02.2011**
(21) Application number: 09167747.6
(22) Date of filing: 12.08.2009
(51) Int. Cl.: G06Q 10/00

(54) **Method for laying-out a business park and a business park**

(71) Applicant: G.S. Hofman Holding B.V., 2676 NB Maasdijk (NL)
(72) Inventor: Hofman, Gerardus Stephanus, 2676 NB MAASDIJK (NL)
(74) Representative: Land, Addick Adrianus Gosling

(57) **Abstract**

The present invention provides a method for laying out a business park, wherein a number of mains services for plots of this business park are connected to a distribution station which obtains from the public utilities mains services such as water, power, heat, cooling medium, telecommunication and other services for the users of the plots and makes these available to each user via the distribution station.

The present invention also comprises a business park which comprises a number of plots and which is also provided with one or more distribution stations for obtaining and further transport of mains services such as water, power, heat, cooling medium, telecommunication and the like, and a number of conduits preferably laid in a shared encasing duct for the purpose of distributing the mains services from the distribution station to the users of the plots.

## Description

The development of business parks is a costly and therefore risky enterprise, certainly in less economically prosperous times. Nor does the vision of (local) authorities always correspond to the wishes of the user. Local authorities are often more concerned with aesthetics and environment than with the low cost which in many cases is most important to the users. Studies carried thus far into "green" business parks are not very practice-oriented and require far-reaching modifications to the infrastructure.

The present invention provides a method for laying out a business park, wherein a number of mains services for plots of this business park are connected to a distribution station which obtains from the public utilities mains services such as water, power, heat, telecommunication and other services for the users of the plots and makes these available to each user via the distribution station.

According to the present invention, during the development of business parks an extensive infrastructure is first built which can be arranged in or above the ground.

It is preferably ensured that the conduits remain frost-free, for instance by arranging them at sufficient depth in the ground or by using suitable insulation and/or heating techniques.

Owing to this infrastructure a business park can be developed in more ecologically, environmentally and aesthetically responsible manner, since use can be made of the greenest forms of mains services. The associated subsidy and the guarantee that the users make use of such green services make the development of such green business parks feasible, which will certainly find favour with local authorities.

As a result of the present invention it will moreover be more readily possible to develop CO₂-neutral business parks.

In a preferred embodiment the mains services comprise one or more heat pumps controlled via the distribution station. As a result of the infrastructure for water, power and the like which are further obtained from the public utilities, it becomes cost-effective to make hot water for space heating, or cold water for cooling purposes, available via heat pumps to the users of the diverse plots.

The present invention also provides a business park which comprises a number of plots and which is also provided with one or more distribution stations for obtaining and further transport of mains services such as water, power, heat, telecommunication and the like, and a number of conduits preferably laid in a shared encasing duct for the purpose of distributing the mains services from the distribution station to the users of the plots.

Although it is possible to envisage the business park comprising diverse conduits in diverse directions, and also possibly comprising a plurality of distribution stations, it would now appear to be most efficient if use is made of a ring main and a single distribution station.

As a result of a further preferred embodiment, wherein valves are arranged in the ring main, a first user can for instance exchange warm wastewater with another user, thereby further saving energy.

The features of the present invention are further elucidated on the basis of the following description, wherein reference is made to the accompanying drawings, in which:
Figure 1 shows a schematic view of a preferred embodiment of a business park according to the present invention;
Figure 2 shows a more detailed view of a business park according to the present invention; and
Figure 3 shows a section along the line III-III of the schematic view of figure 2.

A business park 10 is divided into plots 11, 12, 13, 14, 15, 16, 17, 18, 19, 20 and 21. In the present exemplary embodiment users A, B and C are indicated schematically in respective plots 13, 15 and 21. Users A, B and C, which could be for instance offices, factories or other business premises, are connected to a ring main 40 as shown schematically via respectively conduits 31, 32, conduits 33, 34, 35 and conduits 36, 37, 38, 39. Ring main 40 is connected via a distribution station 41 to conduits 42, 43, 44 of public utilities (not shown).

Conduits 42, 43, 44, which can of course also comprise a plurality of conduits, are for instance for (green) electricity, telecommunication connections (for instance glass-fibre), sewer connections, CO₂ conduits, drinking water pipelines and the like, for so-called greywater, wastewater and/or cooling water. A distribution station can also be connected to heat exchangers 45, 46, which provide the required hot fluid, such as water, for the ring main from the ground via a heat pump, optionally in addition to hot water from district heating systems or other heat sources for space heating. Cooling fluid can be extracted from the ground during the summer and distributed via the ring main.

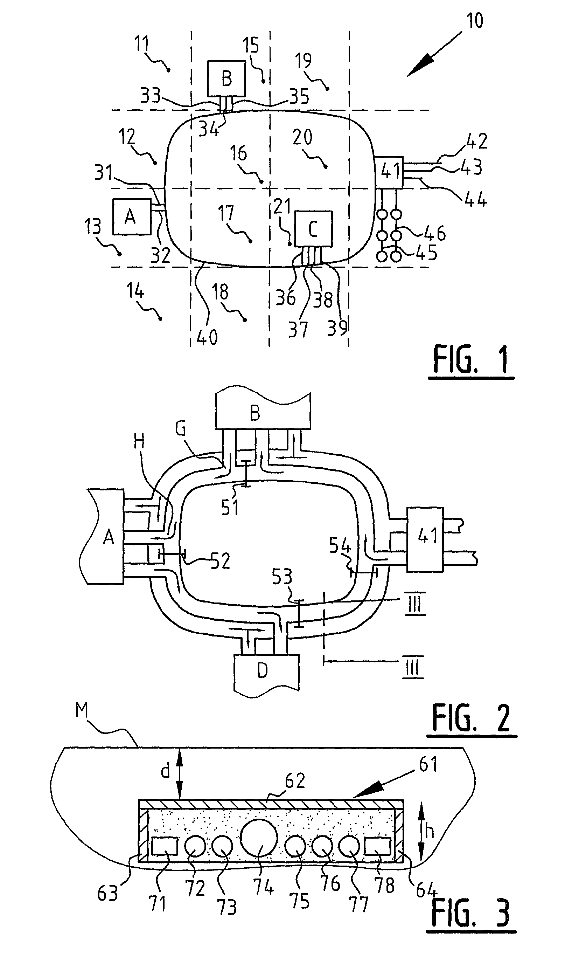

Arranged in a number of main conduits in a preferred embodiment of figure 2 are schematically designated valves 51, 52, 53, 54 which, in a determined position, can ensure that for instance user B is placed into connection with user A without the intervention of distribution station 41. As indicated with arrows G and H, heated cooling water from user B can in this way be used for instance for space heating for user A (or for more users) in order to further save energy.

In a preferred embodiment the conduits are arranged in an encasing duct 61 (figure 3) at a frost-free depth d of for instance 60 cm below ground level M. In this present exemplary embodiment duct 61 is given a block-shaped cross-section with a height h of about 20 cm. In the present exemplary embodiment eight conduits 71, 72, 73, 74, 75, 76, 77, 78 are arranged in encasing duct 61 with insulated walls 62, 63, 64. It is of course also possible to envisage the conduits being arranged in separate compartments which are also insulated from each other, since for instance hot water for district heating is preferably not arranged in the same compartment as a power line for high-voltage current.

The present invention is not limited to the above described preferred embodiments thereof; the rights sought are defined by the following claims, within the scope of which many modifications can be envisaged.

As a result of the present invention so-called green business parks can be set up for which local authorities are prepared to make available considerable subsidies of many hundreds of thousands of euros, while it is possible for the operator of the business park to demand of the users that they make as much use as possible of green mains services.

## Claims

1. Method for laying out a business park, wherein a number of mains services for plots of this business park are connected to a distribution station which obtains from the public utilities mains services such as water, power, heat, cooling medium, telecommunication and other services for the users of the plots, and makes these available to each user via the distribution station.

2. Method as claimed in claim 1, wherein as a result of the distribution station it is guaranteed that all users of plots of the business park obtain the mains services in the most environmentally responsible manner possible, wherein the mains services are preferably as CO₂-neutral as possible.

3. Method as claimed in claim 1 or 2, wherein the mains services comprise one or more heat pumps controlled via the distribution station.

4. Business park which comprises a number of plots and which is also provided with one or more distribution stations for obtaining and further transport of mains services such as water, power, heat, cooling medium, telecommunication and the like, and a number of conduits preferably laid in a shared encasing duct for the purpose of distributing the mains services from the distribution station to the users of the plots.

5. Business park as claimed in claim 4, wherein the conduits (and the encasing duct) form a ring main.

6. Business park as claimed in claim 4 or 5, wherein valves are arranged in the ring main so that services, such as warm wastewater for space heating, can be exchanged via the ring main between users of the plots connected to the ring main.
